Europäisches Patentamt

European Patent Office

Office européen des brevets

(19)

(11) Publication number: **0 210 729**
**B1**

# EUROPEAN PATENT SPECIFICATION

(12)

(45) Date of publication of the patent specification:
**31.01.90**

(51) Int. Cl.⁴: **B 07 B 7/083**

(21) Application number: **86304262.8**

(22) Date of filing: **04.06.86**

(54) Separator for sorting particulate material.

(30) Priority: **23.07.85 GB 8518536**

(43) Date of publication of application:
**04.02.87 Bulletin 87/6**

(45) Publication of the grant of the patent:
**31.01.90 Bulletin 90/5**

(84) Designated Contracting States:
**BE DE FR GB IT**

(56) References cited:
**EP-A- 0 023 320**
**DE-A- 2 527 340**
**DE-C- 352 620**
**FR-A- 1 181 399**
**FR-A- 2 328 526**
**US-A- 2 099 505**

(73) Proprietor: **F.L. Smidth & Co. A/S, 77, Vigerslev Alle,
DK-2500 Valby, Copenhagen (DK)**

(72) Inventor: **Folsberg, Jan, c/o 77 Vigerslev Alle,
DK-2500 Valby Copenhagen (DK)**

(74) Representative: **Jackson, Peter Arthur et al, GILL
JENNINGS & EVERY 53-64 Chancery Lane, London
WC2A 1HN (GB)**

ACTORUM AG

## Description

The invention relates to a separator for sorting particulate material suspended in a conveying gas into a fine fraction and a coarse fraction, the separator comprising a vaned rotor rotatable about a vertical axis. The vanes extend between a bottom plate and a top plate of the rotor, the top plate comprising a distributing arrangement for distributing supplied, unsorted material to the rotor so as to suspend the material in the conveying gas. A housing encases the rotor and has an inlet for supply of the conveying gas to the rotor. An outlet at the upper end of housing discharges the separated fine fraction. At least one inlet is provided in the housing for supply of unsorted particulate material to the upper side of the rotor top plate and an impact ring is positioned around and at a radial distance from the top plate.

A separator of the above kind is known from EP-A-0 023 320, cf. especially Figure 10. This separator is shown with two inlet ducts for the supply of unsorted material. The inlet ducts are positioned at the top of the separator housing diametrically opposite each other in relation to the rotor axis and oriented down towards the upper end of the rotor top plate.

Unsorted material is passed down through the inlet ducts to the upper side of the top plate from where, due to the rotation of the top plate, it is flung outwards towards the surrounding impact ring where the material is stopped and falls down around the rotor, in this case inside a louvre system encasing the rotor.

The conveying gas in this case is directed towards the rotor via a louvre system and collects the falling material and forms a suspension of conveying gas and material around the rotor, which suspension is introduced into the rotor where coarser particles, in known manner, are flung outwards by the centrifugal force deriving from the rotation of the rotor, the finer particles remaining suspended in the conveying gas.

The separated coarser fraction flung outwards towards the louvre system is stopped by same and falls down towards the bottom of the separator into a collecting hopper for the coarse fraction. The finer fraction is passed by the conveying gas up through a central opening in the top plate of the rotor and discharged through the top of the separator to be separated from the conveying gas in a precipitator.

However, with a separator of the above kind it is impossible to achieve an even distribution of the supplied unsorted material around the rotor. This is due to the fact that all unsorted material passed to the upper side of the rotor top plate from an inlet duct is flung away from the top plate already at a rotation angle below 45° - 90° after the inlet proper. Thus along the circumference of the rotor there is at least one zone with practically no material to be suspended in the conveying gas flowing into the rotor, which means an impaired utilization of the separator.

It is an object of the invention to remedy the above drawbacks, and this is achieved by means of an annular collecting casing, secured to and coaxial with the top plate and at a radial distance from the material inlet, the casing having a concave side facing the top plate for collecting material flung outwards from the top plate and for discharging the material downwards.

By means of the collecting casing rotating with the rotor, the material, when flung outwards from the upper side of the rotor top plate, is collected in the concave side of the collecting casing, thus causing the formation of a band of material inside the casing. By gravity the surface layer of this band slides down comparatively slowly to the lower edge of the collecting casing (due to a certain material sliding angle), from the edge of which it is flung outwards towards the surrounding impact ring where it is stopped and falls down around the rotor in known manner.

By collecting the material in the collecting casing and allowing it to slide down comparatively slowly a longer material retention time in the collecting casing is achieved, and consequently a distribution of downwardly falling material form the impact ring along the entire circumference of the rotor. Thereby is achieved a better suspension of the material in the conveying gas around the entire rotor compared with known separator types.

To ensure that all the material flung outwards from the rotor plate is collected by the collecting casing it is advantageous that at least the outermost zone of the top plate is covered by an annular guide plate, which is oriented obliquely upwards and outwards. At the same time it is achieved that the material flung outwards hits the surface of the material band on the collecting casing substantially perpendicularly.

To ensure fewest possible obstructions to the movement of the material out into the collecting casing the latter may advantageously be mounted on spokes secured to the top plate, preferably via the guide plate.

A separator according to the invention will now be described in more detail, reference being made to the accompanying diagrammatic drawings, in which:

Figure 1 is an axial section through the separator, and

Figure 2 is the top left part of Figure 1 on a larger scale.

The separator shown has a rotor 1 with an annular top plate 2 and a solid bottom plate 3 between which rotor vanes 4 extend. The rotor 1 is driven by a vertical shaft 5 from a motor (not shown). The top plate 2 has a central opening 6 leading to an outlet duct 7 at the top of the separator for discharge of a separated fine fraction of the material.

At the upper end of the top plate 2 is mounted an annular, frusto-conical guide plate 8 which, via comparatively thin spokes 9, carries an annular collecting casing 10 so that this is rotatable with the rotor 1.

The rotor 1, the guide plate 8 and the collecting casing 10 are surrounded by a separator housing 11, on the inner side of which and opposite the lower edge of the collecting casing 10 is mounted an annular impact ring 12. Two supply ducts 13 for supply of unsorted material to the upper end of the top plate 2 extend down through the top of the separator housing 11.

The separator operates in the following way:

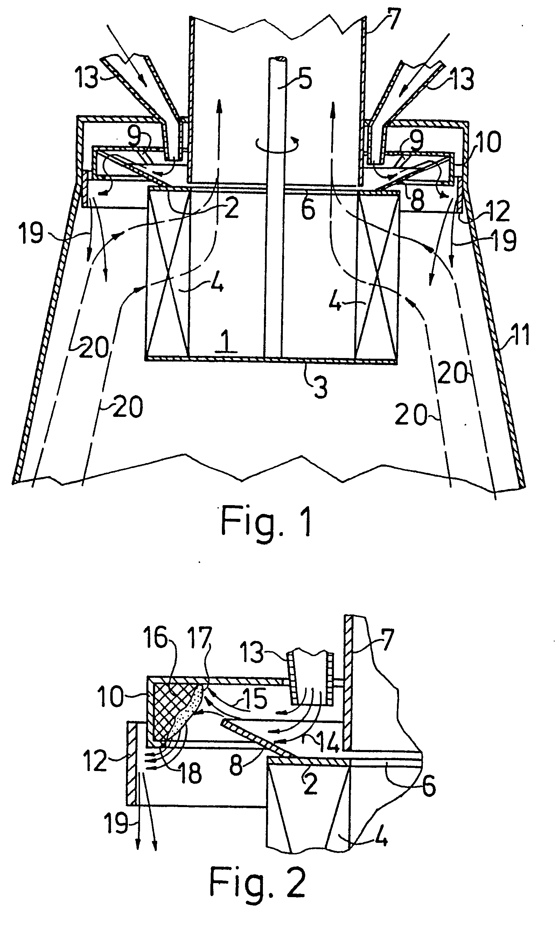

Unsorted material, to be separated into a fine fraction and a coarse fraction, is passed down through the inlet ducts 13 to the upper side of the top plate 2 of the rotor, as indicated by arrows 14 in Figure 2.

Due to the rotation of the rotor the downwardly falling material is flung outwards as indicated by arrows 15 along the top plate 2 and the guide plate 8 to be stopped by the concave inner side of the collecting casing 10. On the inner side of the collecting casing is formed a comparatively stable base layer or band 16 of the material, and over this band an unstable layer 17, which, by gravity, slides comparatively slowly down towards the lower edge 18 of the collecting casing 10. From this edge 18 the material flowing down leaves the collecting casing 10 to be flung outwards against the impact ring 12. The material is stopped by the impact ring and falls down along and around the rotor 1, as indicated by arrows 19.

As it takes a certain time for the material constantly forming the material layer inside the collecting casing 10 to slide downwards, the material has sufficient retention time in the collecting casing 10 to ensure an even distribution all the way around the rotor 1 and not only in a limited zone from the inlet duct 13 in the direction of rotation of the rotor.

The conveying gas flows, as indicated by arrows 20 in Figure 1, up around, into and out through the top of the rotor 1 to the outlet duct 7. The material 19 falling down from the impact ring 12 enters the flow 20 of conveying gas to be suspended therein.

The suspension flows in between the rotor vanes 4 where coarser particles in known manner are returned towards the wall 11 of the separator housing, from where they fall down and may be collected in a hopper (not shown) at the bottom of the separator, while the finer particles remain suspended in the conveying gas with which they leave the top of the separator for possible precipitation as a finished product in a precipitator.

It should be noted that the separator may also (as known) be equipped with a louvre system surrounding the rotor 1, and via which the conveying gas is directed towards the rotor 1. Such a louvre system may be adjustable, thus making it possible to control the direction of flow of the conveying gas flowing towards the rotor.

## Claims

1. A separator for sorting particulate material suspended in a conveying gas into a fine fraction and a coarse fraction, the separator comprising a vaned rotor (1) rotatable about a substantially vertical axis, the vanes (4) extending between a bottom plate (3) and a top plate (2) of the rotor, the top plate (2) having a distributing arrangement (8, 9, 10) for distributing supplied, unsorted material to the rotor so as to suspend the material in the conveying gas, and a housing (11) encasing the rotor and having an inlet for supply of the conveying gas to the rotor, an outlet (7) from the upper end of the rotor for discharge of the separated fine fraction, at least one inlet (13) for supply of unsorted particulate material to the upper side of the rotor top plate (2) and an impact ring (12) positioned around and at a radial distance from the top plate, characterized by an annular collecting casing (10) secured to and coaxial with the top plate (2) and at a radial distance from the material inlet (13), the collecting casing (10) having a concave side facing the top plate (2) for collecting material flung outwards from the top plate and for discharging the material downwards.

2. A separator according to claim 1, characterized in that at least the outermost zone of the top plate (2) is covered by an annular guide plate (8) oriented obliquely upwards and outwards.

3. A separator according to claim 2, characterized in that the guide plate (8) is frusto-conical.

4. A separator according to claim 1, 2 or 3, characterized in that the collecting casing (10) is mounted on spokes (9) secured directly or indirectly to the top plate (2).

5. A separator according to claim 4, when dependent on claim 2, characterized in that the spokes (9) are secured to the annular guide plate (8).

## Ansprüche

1. Sichter zum Sortieren von in einem Fördergas suspendierten partikelförmigen Material in eine feine Fraktion und eine grobe Fraktion, wobei der Sichter verfügt über einen mit Schaufeln ausgestatteten Rotor (1), der um eine im wesentlichen vertikale Achse drehbar ist, wobei sich die Schaufeln (4) zwischen einer Bodenplatte (3) und einer Deckplatte (2) des Rotors erstrecken, wobei die Deckplatte (2) eine Verteilungseinrichtung (8, 9, 10) für die Verteilung des zugeführten, unsortierten Materials an den Rotor aufweist, um so das Material in dem Fördergas zu suspendieren, und über ein den Rotor umgebendes Gehäuse (11) mit einem Einlaß zur Zuführung des Fördergases zu dem Rotor, einem Auslaß (7) vom oberen Ende des Rotors zur Abgabe der abgeschiedenen feinen Fraktion, mindestens einem Einlaß (13) zur Zuführung von unsortiertem partikelförmigen Material an die Oberseite der Rotordeckplatte (2) und einem Prallring (12) der rund um die und in einem radialen Abstand von der Deckplatte angeordnet ist, gekennzeichnet durch ein ringförmiges Sammelgehäuse (10), das an der Deckplatte (2) befestigt und koaxial zu dieser und in einem radialen Abstand von dem Materialeinlaß (13) angeordnet ist, wobei das Sammelgehäuse (10) eine der Deckplatte (2) zugewandte konkave Seite zum Sammeln des von der Deckplatte aus nach außen geschleuderten Materials und zur Abgabe des Materials nach unten aufweist.

2. Sichter nach Anspruch 1, dadurch gekennzeichnet, daß mindestens der äußerste Bereich der Deckplatte (2) durch eine ringförmige Führungsplatte (8) abgedeckt ist, die schräg nach oben und nach außen ausgerichtet ist.

3. Sichter nach Anspruch 2, dadurch gekennzeichnet, daß die Führungsplatte (8) kegelstumpfförmig ist.

4. Sichter nach Anspruch 1, 2 oder 3, dadurch gekennzeichnet, daß das Sammelgehäuse (10) an Speichen (9) angeordnet ist, die direkt oder indirekt an der Deckplatte (2) befestigt sind.

5. Sichter nach Anspruch 4 in Abhängigkeit von Anspruch 2, dadurch gekennzeichnet, daß die Speichen (9) an der ringförmigen Führungsplatte (8) befestigt sind.

**Revendications**

1. Séparateur destiné à trier un matériau particulaire en suspension dans un gaz de transport sous forme d'une fraction fine et d'une fraction grossière, le séparateur comprenant un rotor (1) muni de pales et destiné à tourner autour d'un axe sensiblement vertical, les pales (4) étant disposées entre une plaque inférieure (3) et une plaque supérieure (2) du rotor, la plaque supérieure (2) ayant un ensemble de distribution (8, 9, 10) destiné à répartir le matériau transmis non trié vers le rotor afin qu'il soit mis en suspension dans le gaz de transport, et un boîtier (11) entourant le rotor et ayant une entrée de gaz de transport vers le rotor, une sortie (7) destinée à évacuer la fraction fine séparée de l'extrémité supérieure du rotor, au moins une entrée (13) d'introduction du matériau particulaire non trié vers la face supérieure de la plaque supérieure (2) du rotor, et une bague de choc (12) placée autour de la plaque supérieure et à une certaine distance radiale de cette plaque, caractérisé par un carter collecteur annulaire (10) fixé à la plaque supérieure (2) et coaxial à celle-ci et placé à une certaine distance radiale de l'entrée (13) du matériau, le carter collecteur (10) ayant une face concave tournée vers la plaque supérieure (2) afin qu'elle collecte le matériau projeté vers l'extérieur de la plaque supérieure et évacue le matériau vers le bas.

2. Séparateur selon la revendication 1, caractérisé en ce que la zone externe au moins de la plaque supérieure (2) est recouverte d'une plaque annulaire (8) de guidage orientée obliquement vers le haut et vers l'extérieur.

3. Séparateur selon la revendication 2, caractérisé en ce que la plaque de guidage (8) est tronconique.

4. Séparateur selon la revendication 1, 2 ou 3, caractérisé en ce que le carter collecteur (10) est monté sur des rayons (9) directement ou indirectement fixés à la plaque supérieure (2).

5. Séparateur selon la revendication 4, lorsqu'elle dépend de la revendication 2, caractérisé en ce que les rayons (9) sont fixés à la plaque annulaire de guidage (8).

Fig. 1

Fig. 2